# EUROPEAN PATENT APPLICATION

(11) **EP 4 166 301 A1**
(43) Date of publication of application: **19.04.2023**
(21) Application number: 21826172.5
(22) Date of filing: 15.06.2021
(51) Int. Cl.: B29B 11/16, B29K 105/12, C08K 7/02, C08L 1/02, C08L 101/00

(54) **THERMOPLASTIC RESIN COMPOSITE MATERIAL, THERMOPLASTIC RESIN COMPOSITE MATERIAL PARTICLE, AND MOLDED ARTICLE**

(30) Priority: 15.06.2020 JP 2020103387
(71) Applicant: Tomoegawa Co., Ltd., Tokyo 104-8335 (JP)
(72) Inventor: KUBOTA, Nobuhiro, Shizuoka-shi Shizuoka 421-0192 (JP); IWAMOTO, Kiyoshi, Shizuoka-shi Shizuoka 421-0192 (JP); SANO, Masayoshi, Shizuoka-shi Shizuoka 421-0192 (JP); KAWAGUCHI, Hiroaki, Shizuoka-shi Shizuoka 421-0192 (JP); KIMURA, Yudai, Shizuoka-shi Shizuoka 421-0192 (JP); AKAZAWA, Hideo, Fuji-shi Shizuoka 417-0848 (JP)
(74) Representative: Hoffmann Eitle
(86) International application number: PCT/JP2021/022728
(87) International publication number: WO 2021/256471

(57) **Abstract**

Provided is a thermoplastic resin composite material or a thermoplastic resin composite material particle that includes cellulose fibers, can be used to obtain a molded article excellent in mechanical properties such as strength, and is so excellent in fluidity during melting as to be excellent in molding processability. A thermoplastic resin composite material including cellulose fibers, a compatibilizer, and a thermoplastic resin, wherein the cellulose fibers substantially include only fibers having a fiber diameter of 1 to 50 µm and a fiber length of 10 to 400 µm,a composition ratio by mass of the cellulose fibers to the thermoplastic resin is 10 : 90 to 80 : 20, and arbitrary 10 sections of the thermoplastic resin composite material have a standard deviation of a proportion of an area occupied by the cellulose fibers per predetermined area, the standard deviation being 15% or less.

## Description

### Technical Field

The present invention relates to a thermoplastic resin composite material, a thermoplastic resin composite material particle, and a molded article.

### Background Art

Thermoplastic resins can be easily molded by heating, and thus are used as, for example, components of various products. Thermoplastic resins are generally molded using a molding method, such as injection molding, in which a mold is used from the viewpoint of mass production and production cost.

Recent downsizing and thinning of electronic devices and the like promote downsizing and thinning of components and the like used in the electronic devices and the like, and thermoplastic resins are also to have molding processability into a fine and complicated shape. A thermoplastic resin used in a downsized and thinned component is to have mechanical properties such as further high strength, and therefore the thermoplastic resin is used in combination with a fiber.

In the case of using an inorganic fiber as the fiber combined with the thermoplastic resin, incineration at the time of disposal generates a residue derived from the inorganic fiber, and the residue is to be subjected to a landfill treatment or the like. Therefore, a resin molded body without an inorganic fiber is to be used, and cellulose fibers are used.

As a method for producing such a composite resin, for example, Patent Literature 1 discloses a method for producing a cellulose fiber-containing thermoplastic resin composition. The method includes the steps of putting a cellulose fiber assembly into a mixer having a rotary blade as a stirring means and stirring the cellulose fiber assembly at high speed to defibrate the cellulose fiber assembly, putting a thermoplastic resin into the mixer, then stirring the content, and thus melting the thermoplastic resin with generated frictional heat to obtain a mixture in which the thermoplastic resin is attached to cellulose fibers obtained by defibrating the cellulose fiber assembly, and stirring the mixture at low speed while cooling the mixture.

### Citation List

### Patent Literature

Patent Literature 1: JP 2007-84713 A

### Summary of Invention

### Technical Problem

However, study has not been performed on the fluidity of the resin composite material at the time of molding the cellulose fiber-containing thermoplastic resin composition obtained with the production method in Patent Literature 1, and sufficient fluidity may be not obtained during injection molding or the like, and thus a molding defect may occur or the strength of the molded article may be insufficient.

Therefore, an object of the present invention is to provide a thermoplastic resin composite material or a thermoplastic resin composite material particle that includes cellulose fibers, can be used to obtain a molded article excellent in mechanical properties such as strength, and is so excellent in fluidity during melting as to be excellent in molding processability.

### Solution to Problem

As a result of intensive studies, the present inventors have found that the above problem can be solved with a thermoplastic resin composite material including specific fibers and having a specific density (distribution) and with a thermoplastic resin composite material particle that includes specific fibers oriented in the axial direction and has an adjusted mass flow rate, and thus the present invention has been completed. That is, the present invention is as follows.

The present invention (1) is
a thermoplastic resin composite material including cellulose fibers, a compatibilizer, and a thermoplastic resin, wherein
the cellulose fibers substantially include only fibers having a fiber diameter of 1 to 50 µm and a fiber length of 10 to 400 µm,
a composition ratio by mass of the cellulose fibers to the thermoplastic resin is 10 : 90 to 80 : 20, and
arbitrary 10 sections of the thermoplastic resin composite material have a standard deviation of a proportion of an area occupied by the cellulose fibers per predetermined area, the standard deviation being 15% or less.

The present invention (2) is
the thermoplastic resin composite material according to the present invention (1), wherein each of the cellulose fibers has a bending angle of 0 to 60°, the bending angle formed by an axial direction (A) of the each of the cellulose fibers at one end and an axial direction (B) of the each of the cellulose fibers at another end.

The present invention (3) is
the thermoplastic resin composite material according to the present invention (1) or (2), wherein the composition ratio by mass of the cellulose fibers to the thermoplastic resin is 60 : 40 to 20 : 80.

The present invention (4) is
the thermoplastic resin composite material according to any one of the present inventions (1) to (3), wherein the thermoplastic resin includes any of a polyethylene resin, a polypropylene resin, a vinyl chloride resin, a methacrylic resin, a polystyrene resin, an ABS resin, a polycarbonate resin, a polyacetal resin, a polyamide resin, a polysulfone resin, a modified PPO resin, and a polyester resin.

The present invention (5) is
a thermoplastic resin composite material particle including cellulose fibers and a thermoplastic resin, wherein
the cellulose fibers have an average fiber length of 10 to 400 µm,
the cellulose fibers have an average fiber diameter of 1 to 50 µm,
a content of the cellulose fibers is 20 to 80 mass% based on 100 mass% of a sum of a mass of the thermoplastic resin and a mass of the cellulose fibers, and
the cellulose fibers are substantially oriented in an axial direction of the thermoplastic resin composite material particle.

The present invention (6) is
the thermoplastic resin composite material particle according to the present invention (5), having a melt mass flow rate of 5 to 30 (g/10 min) measured under a load of 2.16 kgf at 230°C.

The present invention (7) is
the thermoplastic resin composite material particle according to the present invention (5) or (6), wherein each of the cellulose fibers has a bending angle of 0 to 60°, the bending angle formed by an axial direction (A) of the each of the cellulose fibers at one end and an axial direction (B) of the each of the cellulose fibers at another end.

The present invention (8) is
the thermoplastic resin composite material particle according to any one of the present inventions (5) to (7), wherein the thermoplastic resin includes any of a polyethylene resin, a polypropylene resin, a vinyl chloride resin, a methacrylic resin, a polystyrene resin, an ABS resin, a polycarbonate resin, a polyacetal resin, a polyamide resin, a polysulfone resin, a modified PPO resin, and a polyester resin.

The present invention (9) is
a molded article obtained by molding the thermoplastic resin composite material particle according to any one of the present inventions (5) to (8).

### Advantageous Effects of Invention

According to the present invention, it is possible to provide a thermoplastic resin composite material and a thermoplastic resin composite material particle that include cellulose fibers, can be used to obtain a molded article excellent in mechanical properties such as strength, and are so excellent in fluidity during melting as to be excellent in molding processability.

### Brief Description of Drawings

Figs. 1A and 1B are explanatory views illustrating an unbent cellulose fiber.
Figs. 2A and 2B are explanatory views illustrating a cellulose fiber having a bending angle (bent cellulose fiber).

### Description of Embodiments

In the present application, a material referred to by the term "thermoplastic resin composite material" is not limited to a particulate material such as a pellet, and the term also refers to a material, such as a molded article, obtained by processing a "thermoplastic resin composite material".

Hereinafter, the thermoplastic resin composite material and the thermoplastic resin composite material particle of the present invention will be described.

### 1. Structures of Thermoplastic Resin Composite Material and Thermoplastic Resin Composite Material Particle

The structures of the thermoplastic resin composite material and the thermoplastic resin composite material particle will be described below.

### 1-1. Structure of Thermoplastic Resin Composite Material

The thermoplastic resin composite material of the present invention includes cellulose fibers and a compatibilizer.

The composition ratio by mass of the cellulose fibers to the thermoplastic resin is 10 : 90 to 80 : 20, and preferably 20 : 80 to 40 : 60.

In the thermoplastic resin composite material, arbitrary 10 sections of the thermoplastic resin composite material have a standard deviation of the proportion of the area occupied by the cellulose fibers per unit area (hereinafter, sometimes simply referred to as standard deviation of the proportion of the area occupied by the cellulose fibers) of 15% or less, and preferably 13% or less. If the standard deviation of the proportion of the area occupied by the cellulose fibers is in such a range, a thermoplastic resin composite material can be obtained that is so excellent in fluidity during melting as to be further excellent in molding processability and can be used to obtain a molded article excellent in mechanical properties such as strength and elastic modulus.

The standard deviation of the proportion of the area occupied by the cellulose fiber is measured with the following method. A thermoplastic resin composite material is cut to form a section, the section is observed from vertically above the section using a scanning electron microscope at a magnification of 250 times, and the image is photographed. Next, in a predetermined area on the sectional surface of the thermoplastic resin composite material in the photographed image, the area occupied by the cellulose fibers observed from vertically above is measured using commercially available software. Here, the predetermined area on the sectional surface of the thermoplastic resin composite material is 2.0 × 10⁵ µm². The area occupied by the cellulose fibers is divided by the predetermined area on the sectional surface of the thermoplastic resin composite material and multiplied by 100, and the resulting value is regarded as the proportion of the area occupied by the cellulose fibers in the section of the thermoplastic resin composite material (hereinafter, sometimes simply referred to as proportion of the area occupied by the cellulose fibers). Arbitrary 10 sections of the thermoplastic resin composite material are measured in the same manner, the standard deviation of the proportion of the area occupied by the cellulose fibers is calculated for the 5 sections, and the resulting standard deviation is regarded as the standard deviation of the proportion of the area occupied by the cellulose fibers.

The standard deviation of the proportion of the area occupied by the cellulose fibers can be adjusted by changing the rotation speed and the screw pattern of the kneading means at the time of kneading the cellulose fibers and the thermoplastic resin as described below.

The shape and the size of the thermoplastic resin composite material of the present invention are not particularly limited. For example, in the case of use for injection molding or the like, a pellet-shaped particle is preferable, and the particle can have a size such that the diameter, the major axis length, or the maximum side length is about 0.5 to 10 mm, and can have a shape such as a spherical, elliptical spherical, cylindrical, polygonal columnar, conical, or polygonal pyramidal shape. In the present invention, a molded article obtained by molding or the like using the thermoplastic resin composite material is also regarded as a thermoplastic resin composite material, and the shape in this case can be a desired shape.

The composition ratio by mass of the cellulose fibers to the thermoplastic resin is 10 : 90 to 80 : 20, and preferably 20 : 80 to 60 : 40. At a composition ratio in such a range, a thermoplastic resin composite material can be obtained that is so excellent in fluidity during melting as to be excellent in molding processability and can be used to obtain a molded article excellent in mechanical properties such as strength and elastic modulus.

The cellulose fibers included in the thermoplastic resin composite of the present embodiment preferably substantially include only fibers having a fiber diameter of 1 to 50 µm. If the fiber diameter is in the above-described range, a thermoplastic resin composite material can be obtained that is so excellent in fluidity during melting as to be excellent in molding processability and can be used to obtain a molded article excellent in mechanical properties such as strength and elastic modulus.

In the thermoplastic resin composite, the fact that the cellulose fibers substantially include only fibers having a fiber diameter of 1 to 50 µm indicates that a cellulose fiber other than the cellulose fibers having a fiber diameter of 1 to 50 µm is not detected in measurement of the fiber diameters of the cellulose fibers in the thermoplastic resin composite with the following method.

In other words, the cellulose fibers preferably include only fibers having a fiber diameter of 1 to 50 µm. The fact that the cellulose fibers include only fibers having a fiber diameter of 1 to 50 µm indicates that when the thermoplastic resin composite of the present invention is photographed using an X-ray CT analyzer and the fiber diameters of all the cellulose fibers are measured, the fiber diameters of the cellulose fibers (the fiber diameters of all the cellulose fibers) are only in the range of 1 to 50 µm.

The fiber diameters of the cellulose fibers are determined by photographing the thermoplastic resin composite using an X-ray CT analyzer and measuring the fiber diameter (long axis length in the case of an elliptical shape, and longest side length in the case of a polygonal shape) for all the fibers. The measurement with an X-ray CT analyzer is performed under the following observation conditions.
Analyzer: Rigaku high-resolution 3D X-ray microscope nano3DX
Measurement conditions: X-ray source Cu (40 kV, 30 mA)
Analysis software: Dragonfly manufactured by Object Research Systems Inc.
Image size: 347.7 × 763.2 µm, thickness: 654 µm

The fiber diameters of the cellulose fibers can be adjusted by changing the rotation speed and the load by the screw pattern of the kneading means or by changing the blending ratio of the cellulose fibers at the time of kneading the cellulose fibers and the thermoplastic resin as described below.

The cellulose fibers included in the thermoplastic resin composite of the present invention preferably substantially include only fibers having a fiber length of 10 to 400 µm, and more preferably substantially include only fibers having a fiber length of 10 to 350 µm. If the fiber length is in the above-described range, a thermoplastic resin composite material can be obtained that is so excellent in fluidity during melting as to be excellent in molding processability and can be used to obtain a molded article excellent in mechanical properties such as strength and elastic modulus.

In the thermoplastic resin composite, the fact that the cellulose fibers substantially include only fibers having a fiber length of 10 to 400 µm (fibers having a fiber length of 10 to 350 µm) indicates that a cellulose fiber other than the cellulose fibers having a fiber length of 10 to 400 µm (10 to 350 µm) is not detected in measurement of the fiber lengths of the cellulose fibers in the thermoplastic resin composite with the following method.

In other words, the cellulose fibers preferably include only fibers having a fiber length of 10 to 400 µm (10 to 350 µm). The fact that the cellulose fibers include only fibers having a fiber length of 10 to 400 µm (10 to 350 µm) indicates that when the thermoplastic resin composite of the present invention is photographed using an X-ray CT analyzer and the fiber lengths of all the cellulose fibers are measured, the fiber lengths of the cellulose fibers (the fiber lengths of all the cellulose fibers) are only in the range of 10 to 400 µm (10 to 350 µm).

The fiber lengths of the cellulose fibers are determined by photographing the thermoplastic resin composite using an X-ray CT analyzer and measuring the fiber length for all the fibers. The measurement with an X-ray CT analyzer is performed under the following observation conditions.
Analyzer: Rigaku high-resolution 3D X-ray microscope nano3DX
Measurement conditions: X-ray source Cu (40 kV, 30 mA)
Analysis software: Dragonfly manufactured by Object Research Systems Inc. (Canada).
Image size: 347.7 × 763.2 µm, thickness: 654 µm

The fiber lengths of the cellulose fibers can be adjusted by changing the rotation speed and the load by the screw pattern of the kneading means or by changing the blending ratio of the cellulose fibers at the time of kneading the cellulose fibers and the thermoplastic resin as described below.

Each cellulose fiber has a bending angle formed by the axial direction of the fiber at one end and the axial direction of the fiber at another end, and the bending angle may be 0 to 60°, preferably 0 to 50°, and more preferably 0 to 40°. If the cellulose fibers have a bending angle in the above-described range, only few cellulose fibers are entangled and a thermoplastic resin composite material can be obtained that is so excellent in fluidity during melting as to be excellent in molding processability and can be used to obtain a molded article excellent in mechanical properties such as strength and elastic modulus.

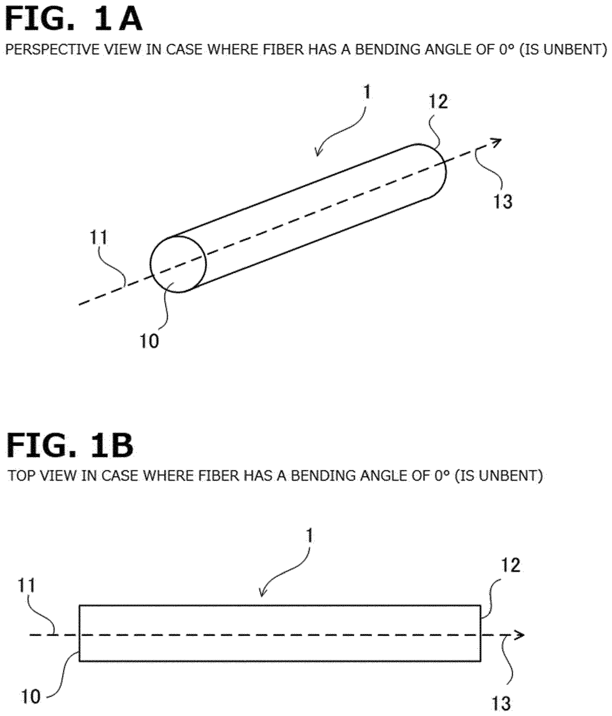

Hereinafter, the bending angle of the cellulose fiber will be described with reference to Figs. 1A to 2B. Fig. 1A shows a perspective view illustrating a cellulose fiber in a case where the cellulose fiber is unbent (the bending angle is 0°), and Fig. 1B shows a top view illustrating the cellulose fiber. A cellulose fiber 1 has one end 10 and another end 12. The one end 10 and the another end 12 can be arbitrarily determined. An axial direction 11 at the one end 10 is regarded as an axial direction (A). An axial direction 13 at the another end 12 is regarded as an axial direction (B). In the axial direction (A), the one end is regarded as a reference, and the direction from the one end 10 toward the fiber (the direction of the arrow in the drawing) is regarded as a positive direction having an angle of 0°. In the axial direction (B), the another end is regarded as a reference, and the direction from the fiber to the another end (the direction of the arrow in the drawing) is regarded as a positive direction having an angle of 0°. In Figs. 1A and 1B, the axial direction 11 (axial direction (A)) and the axial direction 13 (axial direction (B)) are the same direction and overlap each other. That is, the bending angle is 0°, and the fiber is linear.

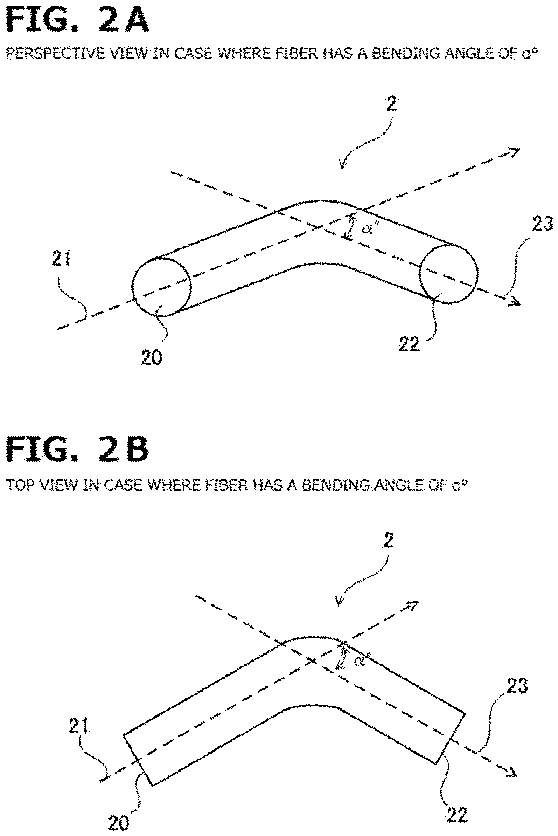

Fig. 2A shows a perspective view illustrating a cellulose fiber in a case where the cellulose fiber is bent, that is, the cellulose fiber has a bending angle, and Fig. 2B shows a top view illustrating the cellulose fiber. As in the case of Figs. 1A and 1B, a cellulose fiber 2 has one end 20 and another end 22. The one end 20 and the another end 22 can be arbitrarily determined. An axial direction 21 at the one end 20 is regarded as an axial direction (A). An axial direction 23 at the another end 22 is regarded as an axial direction (B). The top view of Fig. 2B is a top view observed from the normal direction of the plane including the axial direction 21 and the axial direction 23. In the axial direction (A), the one end is regarded as a reference, and the direction from the one end 20 toward the fiber (the direction of the arrow in the drawing) is regarded as a positive direction having an angle of 0°. In the axial direction (B), the another end is regarded as a reference, and the direction from the fiber to the another end (the direction of the arrow in the drawing) is regarded as a positive direction having an angle of 0°. In Figs. 2A and 2B, the bending angle is defined as an angle formed by the positive axial directions (α in the drawing) of the axial direction 21 (axial direction (A)) and the axial direction 23 (axial direction (B)).

The bending angle of the cellulose fiber can be adjusted by adjusting the balance between the fiber diameter and the fiber length of the cellulose fiber.

### 1-2. Structure of Thermoplastic Resin Composite Material Particle

The thermoplastic resin composite material particle of the present invention includes cellulose fibers and a thermoplastic resin.

The thermoplastic resin composite material particle is a columnar particle. Here, columnar shapes are not limited to cylindrical, elliptical columnar, and polygonal columnar shapes, and include shapes generally regarded as columnar.

The thermoplastic resin composite material particle preferably has a shape such that the diameter, major axis length, or maximum side length is 0.5 to 10 mm. The shape of the thermoplastic resin composite material particle can be observed and measured using, for example, a scale, an optical microscope, and the like.

The thermoplastic resin composite material particle has a melt mass flow rate (hereinafter, sometimes abbreviated as MRF) of 5 to 30 g/10 min measured under a load of 2.16 kgf at 230°C. The melt mass flow rate particularly affects molding processability, and the molding processability is improved in a thermoplastic resin composite material particle having a further large melt mass flow rate. Therefore, a further large melt mass flow rate is preferable, and the upper limit of the melt mass flow rate is 30 g/10 min considering a combination of the melt mass flow rate of a general single thermoplastic resin and the range of the composition ratio of cellulose fibers to the thermoplastic resin.

The melt mass flow rate is measured using the method described in JIS K 7210-1: 2014 "Plastics-Determination of the melt mass-flow rate (MFR) and the melt volume-flow rate (MVR) of thermoplastics-Part 1: Standard method". The measurement is performed under the measurement conditions of a temperature of 230°C and a load of 2.16 kgf.

The content of the cellulose fibers is 20 to 80 mass%, and preferably 40 to 70 mass% based on 100 mass% of the sum of the mass of the thermoplastic resin and the mass of the cellulose fibers. If the content of the cellulose fibers is in such a range, the orientation of the cellulose fibers can be enhanced and a thermoplastic resin composite material particle can be obtained that is so excellent in fluidity during melting as to be excellent in molding processability and can be used to obtain a molded article excellent in mechanical properties such as strength and elastic modulus.

The sum of the mass of the thermoplastic resin and the mass of the cellulose fibers is 90 to 99.9 mass%, preferably 95 to 99.5 mass%, and more preferably 97 to 99 mass% based on 100 mass% of the total mass of the thermoplastic resin composite material particle. If the sum of the mass of the thermoplastic resin and the mass of the cellulose fibers is in such a range, a thermoplastic resin composite material particle can be obtained that is so excellent in fluidity during melting as to be excellent in molding processability and can be used to obtain a molded article excellent in mechanical properties such as strength and elastic modulus.

The cellulose fibers have an average fiber length of 10 to 400 µm, and preferably 10 to 350 µm. If the average fiber length is in the above-described range, a thermoplastic resin composite material particle can be obtained that is so excellent in fluidity during melting as to be excellent in molding processability and can be used to obtain a molded article excellent in mechanical properties such as strength and elastic modulus.

The average fiber length of the cellulose fibers is determined by randomly selecting 50 cellulose fibers included in the thermoplastic resin composite particle of the present invention, photographing the cellulose fibers using a scanning electron microscope, measuring the fiber lengths of the cellulose fibers, and calculating the number average of the fiber lengths.

The average fiber length of the cellulose fibers can be adjusted by changing the rotation speed and the load by the screw pattern of the kneading means or by changing the blending ratio of the cellulose fibers at the time of kneading the cellulose fibers and the thermoplastic resin as described below.

The cellulose fibers have an average fiber diameter of 1 to 50 µm. If the average fiber diameter is in such a range, a thermoplastic resin composite material particle can be obtained that is so excellent in fluidity during melting as to be excellent in molding processability and can be used to obtain a molded article excellent in mechanical properties such as strength and elastic modulus.

The average fiber diameter of the cellulose fibers is determined by randomly selecting 50 cellulose fibers included in the thermoplastic resin composite particle of the present invention, photographing the cellulose fibers using a scanning electron microscope, measuring the diameters (long axis length in the case of an elliptical shape, and longest side length in the case of a polygonal shape) of the cellulose fibers, and calculating the number average of the fiber diameters.

The average fiber diameter of the cellulose fibers can be adjusted by changing the rotation speed and the load by the screw pattern of the kneading means or by changing the blending ratio of the cellulose fibers at the time of kneading the cellulose fibers and the thermoplastic resin as described below.

The cellulose fibers are preferably substantially oriented in the axial direction of the thermoplastic resin composite material particle. In the present invention, the phrase "the cellulose fibers are substantially oriented in the axial direction of the thermoplastic resin composite material particle" means that the axial direction of the longest linear portion of each cellulose fiber (x) and the axial direction of the thermoplastic resin composite material particle (y) form an angle (hereinafter, sometimes referred to as orientation angle) of within ±30° (or ±150°). Here, the orientation angle is a smaller angle formed by the axial direction of the longest linear portion of each cellulose fiber (x) and the axial direction of the thermoplastic resin composite material particle (y).

More specifically, the orientation of the cellulose fibers in the axial direction of the thermoplastic resin composite material particle is determined as follows. Among the cellulose fibers included in the section in the axial direction of the thermoplastic resin composite material particle (any section in which the axial direction of the thermoplastic resin composite material particle and the normal direction of the section are orthogonal to each other), 50 cellulose fibers having a fiber length of 50 to 400 µm are randomly selected, and the orientation angle formed by the axial direction of the thermoplastic resin composite material particle and the axial direction of the longest linear portion of each of the selected 50 cellulose fibers is measured. If the proportion of cellulose fibers having an orientation angle, measured as described above, of ±30° or less is 80% or more (that is, the number of such cellulose fibers is 40 or more) in the selected 50 cellulose fibers, the cellulose fibers are regarded as oriented. The proportion of such cellulose fibers having an orientation angle of within ±30° is preferably 85% or more and more preferably 90% or more in the selected 50 cellulose fibers. As described above, if the proportion of such cellulose fibers having an orientation angle of within ±30° is large in the selected 50 cellulose fibers, entanglement of the cellulose fibers is suppressed and thus a thermoplastic resin composite material particle can be obtained that is so excellent in fluidity during melting as to be excellent in molding processability and can be used to obtain a molded article excellent in mechanical properties such as strength and elastic modulus. The fiber lengths and the orientation angles of these cellulose fibers are observed and measured using an X-ray CT analyzer.

The orientation of the cellulose fibers in the axial direction of the thermoplastic resin composite material particle can be adjusted by changing the cellulose fiber length or the method of strand cutting at the time of granulation as described below.

Each cellulose fiber has a bending angle formed by the axial direction of the fiber at one end and the axial direction of the fiber at another end, and the bending angle may be 0 to 60°, preferably 0 to 50°, and more preferably 0 to 40°. If the cellulose fibers have a bending angle in the above-described range, only few cellulose fibers are entangled and a thermoplastic resin composite material particle can be obtained that is so excellent in fluidity during melting as to be excellent in molding processability and can be used to obtain a molded article excellent in mechanical properties such as strength and elastic modulus.

Hereinafter, the bending angle of the cellulose fiber will be described with reference to Figs. 1A to 2B. Fig. 1A shows a perspective view illustrating a cellulose fiber in a case where the cellulose fiber is unbent (the bending angle is 0°), and Fig. 1B shows a top view illustrating the cellulose fiber. A cellulose fiber 1 has one end 10 and another end 12. The one end 10 and the another end 12 can be arbitrarily determined. An axial direction 11 at the one end 10 is regarded as an axial direction (A). An axial direction 13 at the another end 12 is regarded as an axial direction (B). In the axial direction (A), the one end is regarded as a reference, and the direction from the one end 10 toward the fiber (the direction of the arrow in the drawing) is regarded as a positive direction having an angle of 0°. In the axial direction (B), the another end is regarded as a reference, and the direction from the fiber to the another end (the direction of the arrow in the drawing) is regarded as a positive direction having an angle of 0°. In Figs. 1A and 1B, the axial direction 11 (axial direction (A)) and the axial direction 13 (axial direction (B)) are the same direction and overlap each other. That is, the bending angle is 0°, and the fiber is linear.

Fig. 2A shows a perspective view illustrating a cellulose fiber in a case where the cellulose fiber is bent, that is, the cellulose fiber has a bending angle, and Fig. 2B shows a top view illustrating the cellulose fiber. As in the case of Figs. 1A and 1B, a cellulose fiber 2 has one end 20 and another end 22. The one end 20 and the another end 22 can be arbitrarily determined. An axial direction 21 at the one end 20 is regarded as an axial direction (A). An axial direction 23 at the another end 22 is regarded as an axial direction (B). The top view of Fig. 2B is a top view observed from the normal direction of the plane including the axial direction 21 and the axial direction 23. In the axial direction (A), the one end is regarded as a reference, and the direction from the one end 20 toward the fiber (the direction of the arrow in the drawing) is regarded as a positive direction having an angle of 0°. In the axial direction (B), the another end is regarded as a reference, and the direction from the fiber to the another end (the direction of the arrow in the drawing) is regarded as a positive direction having an angle of 0°. In Figs. 2A and 2B, the bending angle is defined as an angle formed by the positive axial directions (α in the drawing) of the axial direction 21 (axial direction (A)) and the axial direction 23 (axial direction (B)).

The bending angle of the cellulose fiber can be adjusted by adjusting the balance between the fiber diameter and the fiber length of the cellulose fiber.

### 2. Raw Materials of Thermoplastic Resin Composite Material and Thermoplastic Resin Composite Material Particle

The raw materials of the thermoplastic resin composite material and the thermoplastic resin composite material particle of the present invention will be described below.

### 2-1. Thermoplastic Resin

The thermoplastic resin composite material and the thermoplastic resin composite material particle of the present invention include a thermoplastic resin as a binder layer. The thermoplastic resin is not particularly limited as long as an effect of the invention is not impaired, and examples of the thermoplastic resin include a polyethylene resin, a polypropylene resin, a vinyl chloride resin, a methacrylic resin, a polystyrene resin, an ABS resin, a polycarbonate resin, a polyacetal resin, a polyamide resin, a polysulfone resin, a modified PPO resin, and a polyester resin. These resins can be used singly or in combination of two or more of them. A polyethylene resin and a polypropylene resin are preferable from the viewpoint of being able to obtain a thermoplastic resin composite material and a thermoplastic resin composite material particle that are so excellent in fluidity during melting as to be further excellent in molding processability and can be used to obtain a molded article further excellent in mechanical properties such as strength and elastic modulus, and a polypropylene resin is more preferable from the viewpoint of being able to obtain a thermoplastic resin composite material and a thermoplastic resin composite material particle that can be used to obtain a molded article further excellent in mechanical properties such as strength and elastic modulus.

### 2-2. Cellulose Fiber

The cellulose fiber according to the present invention is not particularly limited as long as an effect of the present invention is not impaired. That is, in a preferred method for producing the thermoplastic resin composite material and the thermoplastic resin composite material particle of the present invention obtained by defibrating pulp as described below, pulp is ground (defibrated) to obtain cellulose fibers, and therefore pulp-derived cellulose fibers are preferable. The pulp is defibrated into cellulose fibers, and the thermoplastic resin composite material and the thermoplastic resin composite material particle of the present invention may include an assembly of a plurality of the cellulose fibers resulting from the defibration.

The pulp according to the present invention is not particularly limited as long as an effect of the present invention is not impaired, and may be wood pulp or non-wood pulp from the viewpoint of the raw material, and may be mechanical pulp or chemical pulp from the viewpoint of the production method.

Examples of the wood pulp include MP, CP, GP, RGP, CGP, SP, AP, KP, and SCP made from softwood such as a fir and a pine and hardwood such as a eucalyptus and a poplar, and the pulp may be unbleached pulp or bleached pulp.

Examples of the non-wood pulp include pulp of natural fibers, other than wood, such as cotton, straw, bamboo, esparto, bagasse, linter, kenaf, hemp such as Manila hemp, flax, hemp, and jute, and Diplomorpha sikokiana, and in addition, recycled pulp made from waste paper and chips.

The pulp can be used singly or in combination of two or more kinds thereof. Among the above-described pulp, those made from softwood, hardwood, cotton, and hemp are preferable, and those made from softwood and hardwood are more preferable. Using the above-described pulp, a thermoplastic resin composite material and a thermoplastic resin composite material particle can be obtained that are so excellent in fluidity during melting as to be further excellent in molding processability and can be used to obtain a molded article further excellent in mechanical properties such as strength and elastic modulus. Furthermore, the pulp made from softwood is preferable because softwood contains lignin, hemicellulose, and the like, which are sources of odor and color, in such a small amount that they are relatively easily removed and thus the production process can be simple.

### 2-3. Compatibilizer

The thermoplastic resin composite material of the present invention includes a compatibilizer. The thermoplastic resin composite material particle of the present invention can include a compatibilizer.

The compatibilizer is not particularly limited as long as an effect of the present invention is not impaired, and can be selected according to the combination of cellulose fibers and a thermoplastic resin. The compatibilizer is used for dispersing cellulose fibers having relatively high hydrophilicity in a thermosetting resin having relatively high hydrophobicity. Therefore, the compatibilizer is preferably a block copolymer having a nonpolar segment and a polar segment. Here, the nonpolar segment is preferably an olefin-based segment. An effect of the present invention can be obtained even if the thermoplastic resin composite material particle of the present invention includes no compatibilizer. If the thermoplastic resin composite material particle includes a compatibilizer, the dispersibility of the cellulose fibers are further excellent and thus entanglement between the cellulose fibers is reduced and the cellulose fibers are easily oriented in the axial direction of the thermoplastic resin composite material particle. Therefore, a thermoplastic resin composite material particle can be obtained that is so excellent in fluidity during melting as to be further excellent in molding processability and can be used to obtain a molded article further excellent in mechanical properties such as strength and elastic modulus. Furthermore, the thermoplastic resin composite material particle is easily produced because the cellulose fibers are easily dispersed in the thermoplastic resin at the time of kneading the cellulose fibers and the thermoplastic resin.

Here, the olefin-based segment is a segment in which olefin-based monomers are polymerized or an olefin-based monomer and a styrene-based monomer are copolymerized. Examples of the olefin-based monomer include ethylene, propylene, methylpentene, butadiene, and norbornene derivatives. Only one kind of an olefin-based monomer may be used, or two or more kinds thereof may be used.

The polar segment is preferably an ester-based segment or a styrene-based segment.

The ester-based segment is a segment obtained by condensation polymerization of an alcohol-based monomer and an acid-based monomer.

Examples of the alcohol-based monomer to be used include α,ω-alkylene diols (C2 to C12) such as ethylene glycol, 1,3-propylene glycol, 1,4-butanediol, 1,6-hexanediol, 1,8-octanediol, 1,10-decanediol, and 1,12-dodecanediol, polyalkylene glycols such as diethylene glycol, triethylene glycol, and dipropylene glycol, aliphatic dihydric alcohols such as 1,2-propanediol, neopentyl glycol, and 1,4-cyclohexanedimethanol, polyhydric alcohols such as glycerin, 1,1,1-tris(4-hydroxyphenyl)ethane, trimethylolethane, trimethylolpropane, and sugars such as monosaccharides, disaccharides, ring-opened sugars, and modified sugars, bisphenols such as 2,2-bis(4-hydroxyphenyl)propane, bis(4-hydroxyphenyl)methane, 1,1-bis(4-hydroxyphenyl)cyclohexane, 2,2-bis(3-methyl-4-hydroxyphenyl)propane, 2,2-bis(3-phenyl-4-hydroxyphenyl)propane, 4,4'-dihydroxydiphenyl sulfone, 4,4'-dihydroxydiphenyl ether, and bis(4-hydroxyphenyl)diphenylmethane, monomers obtained by modifying a hydroxyl group in these bisphenols with an alkylene glycol such as polyethylene glycol or polypropylene glycol, and monomers obtained by hydrogenating an aromatic ring in these bisphenols.

Examples of the acid-based monomer to be used include saturated aliphatic carboxylic acids such as succinic acid, adipic acid, azelaic acid, sebacic acid, and octylsuccinic acid, unsaturated aliphatic carboxylic acids such as maleic acid, fumaric acid, and maleic anhydride, cyclic aliphatic carboxylic acids such as 1,2-cyclohexanedicarboxylic acid, 1,4-cyclohexanedicarboxylic acid, and 2,3-bicyclo[2,2,1]dicarboxylic acid, aromatic dicarboxylic acids such as terephthalic acid, isophthalic acid, phthalic acid, and naphthalenedicarboxylic acid, and trivalent or higher polyvalent carboxylic acids such as trimellitic acid, trimellitic anhydride, pyromellitic acid, pyromellitic anhydride, 1,2,4-cyclohexanetricarboxylic acid, 1,2,4-cyclohexanetricarboxylic anhydride, 1,2,4-butanetricarboxylic acid, 1,2,4-butanetricarboxylic anhydride, 2,5,7-naphthalenetricarboxylic acid, 1,2,4-naphthalenetricarboxylic acid, and 1,2,4-naphthalenetricarboxylic anhydride.

Here, the carboxylic acid may be an acid halide, an ester, or an acid anhydride. Among them, maleic anhydride-modified polypropylene, which has been successfully highly modified while maintaining a high molecular weight, is improved in adhesion to fillers, and causes entanglement at a molecular level, and thus can generate the strength of the polyolefin-based composite material.

The styrene-based segment is a segment in which styrene-based monomers are polymerized or a styrene-based monomer and an acrylic monomer are copolymerized. Examples of the styrene-based monomer include styrene, o-methylstyrene, m-methylstyrene, p-methylstyrene, p-ethylstyrene, 2,4-dimethylstyrene, p-n-butylstyrene, p-tert-butylstyrene, p-n-hexylstyrene, p-n-octylstyrene, p-n-nonylstyrene, p-n-decylstyrene, p-n-dodecylstyrene, p-methoxystyrene, p-phenylstyrene, p-chlorostyrene, and 3,4-dichlorostyrene.

Examples of the acrylic monomer include n-butyl methacrylate, isobutyl methacrylate, ethyl acrylate, n-butyl acrylate, methyl methacrylate, glycidyl methacrylate, dimethylaminoethyl methacrylate, diethylaminoethyl methacrylate, diethylaminopropyl acrylate, 2-ethylhexyl acrylate, butyl acrylate-N-(ethoxymethyl)acrylamide, ethylene glycol methacrylate, and 4-hexafluorobutyl methacrylate. These acrylic monomers can be used singly or in combination of two or more of them. These monomers may be modified.

In the compatibilizer, another monomer may be polymerized as long as an effect of the present invention is not impaired. Examples of another monomer include vinyl-based monomers including vinyl ester-based monomers such as vinyl acetate, vinyl propionate, vinyl benzoate, and vinyl butyrate, vinyl ether-based monomers such as vinyl methyl ether, vinyl ethyl ether, and vinyl butyl ether, and vinyl ketone-based monomers such as vinyl methyl ketone, vinyl hexyl ketone, and vinyl isopropenyl ketone, and diene-based monomers such as isoprene and 2-chlorobutadiene.

The content of the compatibilizer is not particularly limited as long as an effect of the present invention is not impaired, and for example, the content can be 0.1 to 10 mass%, preferably 0.5 to 5 mass%, and more preferably 1 to 3 mass% based on 100 mass% of the total mass of the thermoplastic resin composite material or the thermoplastic resin composite material particle. If the content of the compatibilizer is in such a range, a thermoplastic resin composite material and a thermoplastic resin composite material particle can be obtained that are so excellent in fluidity during melting as to be excellent in molding processability and can be used to obtain a molded article excellent in mechanical properties such as strength and elastic modulus.

### 3. Method for Producing Thermoplastic Resin Composite Material and Thermoplastic Resin Composite Material Particle

Hereinafter, a preferred example of the method for producing the thermoplastic resin composite material and the thermoplastic resin composite material particle of the present invention will be described. The method for producing the thermoplastic resin composite material and the thermoplastic resin composite material particle of the present invention is not limited thereto. Pulp is kneaded and then defibrated into cellulose fibers. Therefore, the amount of the cellulose fibers added is equal to the amount of the pulp added.

### 3-1. Coarse Grinding Step

The pulp is ground into small pulp pieces in a coarse grinding step before mixing with the thermoplastic resin. The size of the small pulp pieces is not particularly limited, but in order to facilitate mixing and shorten the time of the kneading step, the diameter or the longest side of the small pulp pieces is preferably 10 to 50 mm. Small pulp pieces having such a size exhibit excellent dispersibility in the kneading step.

The coarse grinding can be performed using a known method, and examples of the method include grinding methods in which a grinder such as a hammer mill, a cutter mill, or a jet mill is used.

### 3-2. Kneading Step

The thermoplastic resin, the small pulp pieces, and the compatibilizer are mixed and then kneaded. The mixing method and the kneading method are not particularly limited, and can be a known method. In the kneading step, the small pulp pieces are ground (defibrated) into cellulose fibers, and the cellulose fibers are kneaded with the thermoplastic resin.

Examples of the mixing method include methods in which a stirrer such as a Henschel mixer, a super mixer, or a ribbon mixer is used.

Examples of the kneading method include methods in which a twin screw extruder, a Banbury mixer, or a pressure roller is used.

The kneading is generally performed with heating. The kneading conditions are not particularly limited, but the heating temperature is preferably set to be equal to or higher than the softening point of the thermoplastic resin. At such a temperature, a thermoplastic resin composite material and a thermoplastic resin composite material particle can be obtained that are so excellent in fluidity during melting as to be excellent in molding processability and can be used to obtain a molded article excellent in mechanical properties such as strength and elastic modulus. Thus, kneading of the resin and the cellulose fibers are promoted, and a thermoplastic resin composite material and a thermoplastic resin composite material particle can be obtained in which fibers are uniformly dispersed without a fiber mass.

### 3-3. Granulation Step

The kneaded product obtained by the kneading step is formed into a particulate (for example, pellet-shaped) thermoplastic resin composite material or thermoplastic resin composite material particle by a granulation step.

In the granulation method, the kneaded resin is discharged from a die with an extruder and cut into a pellet shape with a rotating blade under air cooling. The length of the cut pellet can be changed by adjusting the rotation speed of the rotating blade. The particle shape is not particularly limited, and may be, for example, a polygonal columnar shape or a cylindrical shape.

### 3-4. Uses of Thermoplastic Resin Composite Material and Thermoplastic Resin Composite Material Particle

The thermoplastic resin composite material and the thermoplastic resin composite material particle of the present invention can be used as a raw material of a molded article in a method of molding using a mold, such as injection molding, a method of molding with a 3D printer, or the like. The thermoplastic resin composite material and the thermoplastic resin composite material particle are particularly preferably used in molded components having a fine structure or a complicated structure in vehicles, devices, and apparatuses, industrial materials such as containers, pallets, plastic cores, and building materials, daily necessities, and miscellaneous goods.

### Examples

### «Examples 1 to 8 and Comparative Examples 1 to 4»

### <Preparation of Thermoplastic Resin Composite Material>

### (Raw Materials)

- Thermoplastic resin
   Polypropylene (MG03BD manufactured by Novatec Corporation)
   Polyethylene (UJ480 manufactured by Japan Polyethylene Corporation)
- Pulp (raw material of cellulose fibers)
   Softwood pulp (NBKP manufactured by Canfor)
   Hardwood pulp (LBKP manufactured by Suzano)
- Compatibilizer
   Compatibilizer (Kayabrid 002PP-NW manufactured by Kayaku Akzo Co., Ltd.)

### (Preparation of Thermoplastic Resin Composite Materials of Examples and Comparative Examples)

Pulp was weighed in an amount shown in Table 1, and coarsely ground using a grinder until the pulp was ground into small pieces having a length of 40 mm or less and a width of 10 mm or less.

The obtained small pulp pieces were blended with a resin at a mass ratio shown in Table 1. A compatibilizer was further added so that the content of the compatibilizer was 1 mass% based on 100 mass% of the total mass of the mixture of the obtained small pulp pieces, the thermoplastic resin, and the compatibilizer, and the mixture was dry-blended to obtain a mixture of each of Examples and Comparative Examples. Each obtained mixture was melt-kneaded with each of the production methods i to vi shown in Table 2 using a biaxial kneader (PCM30 manufactured by IKEGAI). Table 2 shows details of the production methods i to vi. The obtained kneaded product of each of Examples and Comparative Examples was hot-cut to obtain a pellet of the thermoplastic composite material of each of Examples and Comparative Examples. The dispersibility in Table 2 was judged according to the following evaluation criteria.

### (Evaluation Criteria of Dispersibility)

⊚: Standard deviation of area proportion is 13% or less
○: Standard deviation of area proportion is more than 13% and 15% or less
△: Standard deviation of area proportion is more than 15%
×: Standard deviation of area proportion is unmeasurable

The above-described methods were used for measurement of the obtained pellet of each of Examples 1 to 8 and Comparative Examples 1 to 4 to determine the fiber diameter and the fiber length of the cellulose fibers, the standard deviation of the proportion of the area occupied by the cellulose fibers per predetermined area in arbitrary 10 sections, and the bending angle. Table 1 shows the results. In Comparative Examples 1 and 4, the cellulose fibers had poor dispersibility (were present as small pulp pieces, that is, were agglomerated without being defibrated into cellulose fibers), and the fiber diameter and the fiber length of the cellulose fibers, the standard deviation of the proportion of the area occupied by the cellulose fibers per predetermined area in arbitrary 10 sections, and the bending angle were unmeasurable.

### «Examples 9 to 29 and Comparative Examples 5 to 10»

### <Preparation of Thermoplastic Resin Composite Material Particle>

### (Raw Materials)

- Thermoplastic resin
   Polypropylene (MG03BD manufactured by Novatec Corporation)
   Polyethylene (UJ480 manufactured by Japan Polyethylene Corporation)
- Pulp (raw material of cellulose fibers)
   Softwood pulp (NBKP manufactured by Canfor)
   Hardwood pulp (LBKP manufactured by Suzano)
   Cotton pulp (manufactured by Toho Tokusyu Pulp Co., LTD.)
   Hemp pulp (Philippine Abaca pulp manufactured by Toho Tokusyu Pulp Co., LTD.)
- Compatibilizer
   Compatibilizer (Kayabrid 002PP-NW manufactured by Kayaku Akzo Co., Ltd.)

### (Preparation of Thermoplastic Resin Composite Material Particles of Examples 9 to 29 and Comparative Examples 5 to 10)

Pulp was weighed in an amount shown in Tables 3 and 4, and coarsely ground using a grinder until the pulp was ground into small pieces having a length of 40 mm or less and a width of 10 mm or less. The obtained small pulp pieces were blended with a resin at a mass ratio shown in Tables 3 and 4. A compatibilizer was further added so that the content of the compatibilizer was 1 mass% based on 100 mass% of the total mass of the mixture of the obtained small pulp pieces, the thermoplastic resin, and the compatibilizer, and the mixture was dry-blended to obtain a mixture of each of Examples and Comparative Examples. Each obtained mixtures was kneaded under the conditions of a feed amount of 5 kg/h, a rotation speed of 200 rpm, and a kneading temperature of 120 to 150°C using a biaxial kneader (PCM30 manufactured by IKEGAI). The obtained kneaded product was subjected to strand cutting (a method in which a resin is discharged from an extruder into a thin rod shape, immersed in water and cooled, and cut) under one of the following conditions A to D (discharging conditions of a resin from an extruder during granulation) to obtain a cylindrical particle having a length of 6 mm and a width of 3 mm, and thus the thermoplastic resin composite material particles of Examples 9 to 29 and Comparative Examples 5 to 10 were obtained.
A: A resin is discharged from an extruder, stretched by about 1 m in the atmosphere, and then immersed in water.
B: A resin is discharged from an extruder, immediately immersed in water, and stretched.
C: A resin is discharged from an extruder, and immediately immersed in water (not stretched).
D: A resin is discharged from an extruder (not immersed in water and not stretched).

The above-described methods were used for measurement of the thermoplastic resin composite material particle of each of Examples 9 to 29 and Comparative Examples 5 to 10 to determine the average fiber diameter and the average fiber length of the cellulose fibers, the proportion of a cellulose fiber having an orientation angle of within ±30° formed by the axial direction of the thermoplastic resin composite material particle and the axial direction of the longest linear portion of the cellulose fiber in 50 cellulose fibers having a fiber length of 50 to 400 µm randomly selected from the cellulose fibers included in any section in which the axial direction of the thermoplastic resin composite material particle and the normal direction of the section in the axial direction of the thermoplastic resin composite material particle are orthogonal to each other, and the bending angle. Tables 3 and 4 show the results.

### <<Measurement of Other Items>>

### (Melt Mass Flow Rate)

The pellet of each of Examples and Comparative Examples was measured using a measuring instrument (Melt Indexer F-F01 manufactured by Toyo Seiki Seisaku-sho, Ltd.) to determine the flow rate under a load of 2.16 kgf at 230°C. Tables 1, 3, and 4 show the results.

### (Tensile Strength)

The pellet of each of Examples and Comparative Examples was dried in a dryer at 80°C for 30 minutes, and the resin was melted using an injection molding machine (TD100-25ASE manufactured by NISSEI PLASTIC INDUSTRIAL CO., LTD.) under the conditions of a cylinder temperature and a nozzle temperature of 180°C, fed into a mold having a shape of a dumbbell-shaped test piece, and cooled to obtain a molded body. The molded body had a shape of a dumbbell-shaped test piece having a plate-shaped test piece size specified in JIS Z 2201: 1968. Each obtained dumbbell-shaped test piece was measured using an Instron material testing machine (AUTOGRAPH AG25 TA manufactured by Shimadzu Corporation) at a crosshead speed of 50 mm/min to determine the tensile strength from the load at the time of rupture. Tables 1, 3, and 4 show the measurement results.

### (Flexural Strength)

A test piece of the pellet of each of Examples and Comparative Examples was prepared in the same manner as in measurement of the tensile strength described above. Each obtained dumbbell-shaped test piece was measured using an Instron material testing machine (RTC-2410 manufactured by A & D Company, Limited, load cell: 5 kN) by setting the span to 60 mm and bringing an indenter having a radius of 5 mm into contact with the central portion of the plane of the test piece to apply a load to determine the flexural strength from the load at the time of rupture. Note that in the measurement of the flexural strength, the test piece was placed so that the load applied by the indenter was parallel to the thickness direction of the test piece, and the crosshead speed was set to 2 mm/min. Tables 1, 3, and 4 show the measurement results.

### (Deflection Temperature under Load (HDT))

A test piece of each of Examples and Comparative Examples was prepared in the same manner as in the method for preparing a test piece for measurement of the tensile strength except that the mold was changed to a mold for a test piece having a shape specified in JIS K 7191: 2007 "Plastics-Determination of temperature of deflection under load-Part 1: General test method" (length 80 ± 2.0 mm × width 10 ± 0.2 mm × thickness 4 ± 0.2 mm). The deflection temperature under load was measured using an HDT tester (3M-2 manufactured by Toyo Seiki Seisaku-sho, Ltd.). The measurement conditions were set to a measurement start temperature of 60°C, a temperature increase rate of 2°C/min, a flexural stress to be applied to 0.45 MPa, and the temperature when the deflection reached 0.34 mm was measured as the deflection temperature under load. Tables 1, 3, and 4 show the results.

### (Molding Processability)

The pellet of each of Examples and Comparative Examples was used for injection molding under molding conditions of a temperature of 180°C, an injection output of 800 to 1000 MPa, and a mold temperature of 60°C to prepare a dumbbell test piece having a total length of 174.25 mm, a width of 20.5 mm, and a thickness of 4 mm.

### (Evaluation Criteria)

⊚: A dumbbell test piece can be molded normally.
○: Although molding progresses only halfway under the set conditions, a dumbbell test piece can be molded under a pressure increased to 1500 MPa.
△: Although molding progresses only halfway after the pressure change, a dumbbell test piece can be molded at a temperature increased to 200°C.
×: The gate is clogged and no dumbbell test piece can be molded.

**[Table 1]**

| | | Example 1 | Example 2 | Example 3 | Example 4 | Example 5 | Example 6 | Example 7 | Example 8 | Comparative Example 1 | Comparative Example 2 | Comparative Example 3 | Comparative Example 4 |
|---|---|---|---|---|---|---|---|---|---|---|---|---|---|
| Cellulose fiber | Kind | Softwood | Softwood | Softwood | Softwood | Softwood | Hardwood | Softwood | Softwood | Softwood | Softwood | Softwood | Softwood |
| | Amount (mass%) | 40 | to | 20 | 60 | 80 | 40 | 40 | 40 | 40 | 40 | 40 | 40 |
| Resin | Kind | PP | PP | PP | PP | PP | PP | PE | PP | PP | PP | PP | PP |
| | Amount (mass%) | 60 | 90 | 80 | 40 | 20 | 60 | 60 | 60 | 60 | 60 | 60 | 60 |
| Total amount (mass%) | | 100 | 100 | 100 | 100 | 100 | 100 | 100 | 100 | 100 | 100 | 100 | 100 |
| Production condition | | i | i | i | i | i | i | i | ii | iii | iv | v | vi |
| Fiber diameter of cellulose fibers | | 2~50 | 2~50 | 2~50 | 2~50 | 2~50 | 2~50 | 2~50 | 2~50 | - | 5~60 | 5~60 | - |
| Fiber length of cellulose fibers | | 20∼300 | 30~350 | 25∼330 | 15∼270 | 10∼350 | 25~320 | 20∼300 | 30∼380 | - | 150~1000 | 200∼1200 | - |
| Fluctuation (standard deviation) of proportion of area occupied by cellulose fibers | | 5.07 | 12.04 | 8.56 | 2.96 | 2.04 | 5.21 | 5.67 | 10.85 | - | 20.88 | 22.65 | - |
| Bending angle of cellulose fibers | | 30 | 30 | 30 | 30 | 30 | 30 | 30 | 45 | - | 90 | 120 | - |
| MFR(g/10min) | | 25 | 30 | 28 | 16 | 8 | 24 | 30 | 18 | - | 3 | 2 | - |
| Tensile strength (MPa) | | 35 | 24 | 29 | 38 | 43 | 34 | 25 | 37 | - | 25 | 24 | - |
| Flexural strength (MPa) | | 64 | 42 | 50 | 68 | 75 | 60 | 48 | 67 | - | 55 | 55 | - |
| Deflection temperature under load (°C) | | 140 | 120 | 130 | 148 | 156 | 141 | 133 | 140 | - | 138 | 136 | - |

**[Table 2]**

| | | i | | ii | | iii | | iv | | v | | vi | |
|---|---|---|---|---|---|---|---|---|---|---|---|---|---|
| Dispersibility | | ⊚ | | ○ | | × | | △ | | △ | | × | |
| Kneading condition | | Shearing stress | Ternoerature | Shearing stress | Temperature | Shearing stress | Temperature | Shearing stress | Temperature | Shearing stress | Temperature | Shearing stress | Ternoerature |
| Zone in kneading line | C1~C2 | Very weak (used screw pattern: NDN) | 120°C | Very weak (used screw pattern: NDN) | 120°C | Very weak (used screw pattern; NDN) | 120°C | Very weak (used screw pattern: NON) | 120°C | Very weak (used screw pattern: NDN) | 120°C | Very weak (used screw pattern: NDN) | 120°C |
| | C3 | Strong (used screw pattern: NDW) | 140°C | Moderate (used screw pattern: NDL) | 140°C | Strong (used screw pattern: NDW) | 140°C | Weak (used screw pattern; NDR) | 140°C | Strong (used screw pattern: NDW) | 200°C | Strong (used screw pattern: NDW) | 140°C |
| | C4 | | | | | | | | | | | | |
| | C5 | | | | | | | | | | | | |
| | C6 | Moderate (used screw pattern: NDL) | 170°C | Moderate (used screw pattern; NDL) | 170°C | Strong (used screw pattern: NDW) | 170°C | Weak (used screw pattern: NDR) | 170°C | Moderate (used screw pattern: NDL) | 200°C | Moderate (used screw pattern: NDL) | 140°C |
| | C7 | | | | | | | | | | | | |
| | C8 | Weak (used screw pattern: NDR) | 200°C | Moderate (used screw pattern: NDL) | 200°C | Strong (used screw pattern: NDW) | 200°C | Weak (used screw pattern: NDR) | 200°C | Weak (used screw pattern: NDR) | 200°C | Weak (used screw pattern: NDR) | 140°C |
| | Outlet | Very weak (used screw pattern: NDN) | 200°C | Very weak (used screw pattern: NDN) | 200°C | Very weak (used screw pattern: NDN) | 200°C | Very weak (used screw pattern: NDN) | 200°C | Very weak (used screw pattern: NDN) | 200°C | Very weak (used screw pattern: NDN) | 200°C |

In Table 2, NDW indicates use of a kneading disc W, NDL indicates use of a kneading disc L, and NDR indicates use of a kneading disc R, and NDW indicates a relatively strong kneading strength condition, NDL indicates a relatively moderate kneading strength condition, and NDR indicates a relatively weak kneading strength condition. The dispersibility in Table 2 is evaluated in accordance with the following evaluation criteria by observing the section of the pellet prepared under each production condition using a scanning electron microscope.

**[Table 3]**

| Factor, evaluation results | | Example 9 | Example 10 | Example 11 | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|---|---|---|
| Cellulose fit | Kind | Softwood | Softwood | Softwood | Softwood | Softwood | Softwood | Softwood | Softwood | Softwood | Softwood | Softwood | Softwood | Softwood | Softwood |
| | Amount (mass%) | 55 | 55 | 20 | 45 | 55 | 65 | 80 | 55 | 55 | 55 | 55 | 55 | 55 | 55 |
| Resin | Kind | PP | PP | PP | PP | PP | PP | PP | PP | PP | PP | PP | PP | PP | PP |
| | Amount (mass%) | 45 | 45 | 80 | 55 | 45 | 35 | 20 | 45 | 45 | 45 | 45 | 45 | 45 | 45 |
| Total amount (mass%) | | 100 | 100 | 100 | 100 | 100 | 100 | 100 | 100 | 100 | 100 | 100 | 100 | 100 | 100 |
| Average fiber length of cellulose fibers (µm) | | 180 | 20 | 180 | 180 | 180 | 180 | 180 | 340 | 390 | 180 | 180 | 180 | 180 | 180 |
| Average fiber diameter of cellulose fibers (µm) | | 5 | 5 | 25 | 25 | 25 | 25 | 25 | 25 | 25 | 45 | 25 | 25 | 25 | 25 |
| Orientation of cellulose fibers. | | 86 | 81 | 92 | 94 | 95 | 94 | 88 | 86 | as | 95 | 87 | 80 | 95 | 88 |
| Bending angle of cellulose fibers (°) | | 50 | 10 | 10 | 10 | 10 | 10 | 30 | 10 | 10 | 10 | 10 | 10 | 0 | 35 |
| Discharging condition of resin from extruder during granulation | | A | A | A | A | A | A | A | A | A | A | B | C | A | A |
| MFR(g/10min) | | 6 | 6 | 25 | 25 | 20 | 15 | 8 | 14 | 12 | 16 | 12 | 10 | 30 | 15 |
| Molding processability | | ○ | ○ | ⊚ | ⊚ | ⊚ | ⊚ | ○ | ⊚ | ○ | ⊚ | ⊚ | ○ | ⊚ | ⊚ |
| Tensile strength (MPa) | | 41 | 43 | 35 | 37 | 43 | 40 | 30 | 39 | 40 | 40 | 39 | 40 | 44 | 39 |
| Flexural strength (MPa) | | 66 | 55 | 50 | 58 | 60 | 69 | 62 | 58 | 65 | 65 | 60 | 56 | 56 | 60 |
| Deflection temperature under load (°C) | | 149 | 141 | 132 | 148 | 151 | 151 | 152 | 150 | 149 | 151 | 153 | 153 | 152 | 151 |

**[Table 4]**

| Factor, evaluation results | | Example 23 | Example 24 | Example 25 | Example 26 | Example 27 | Example 28 | Example 29 | Comparative Example 5 | Comparative Example 6 | Comparative Example 7 | Comparative Exanole 8 | Comparative Conparative Example 9 | Example 10 |
|---|---|---|---|---|---|---|---|---|---|---|---|---|---|---|
| Cellulose fiber | Kind | Softwood | Softwood | Softwood | Softwood | Hardwood | Cotton | Hemp | Softwood | Softwood | Softwood | Softwood | Softwood | Softwood |
| | Amount (mass%) | 55 | 55 | 55 | 55 | 55 | 55 | 55 | 55 | 55 | 10 | 90 | 55 | 55 |
| Resin | Kind | PP | PP | PP | PE | PP | PP | PP | PP | PP | PP | PP | PP | PP |
| | Amount (mass%) | 45 | 45 | 45 | 45 | 45 | 45 | 45 | 45 | 45 | 90 | 10 | 45 | 45 |
| Total amount (mass%) | | 100 | 100 | 100 | 100 | 100 | 100 | 100 | 100 | 100 | 100 | 100 | 100 | 100 |
| Average fiber length of cellulose fibers (µm) | | 180 | 180 | 180 | 180 | 180 | 180 | 180 | 180 | 5 | 180 | 500 | 450 | 180 |
| Average fiber diameter of cellulose fibers (µm) | | 25 | 25 | 25 | 25 | 25 | 25 | 25 | 0.3 | 5 | 40 | 25 | 25 | 25 |
| Orientation of cellulose fibers | | 88 | 86 | 85 | 95 | 95 | 95 | 95 | 82 | 81 | 84 | 57 | 65 | 70 |
| Bending angle of cellulose fibers (°) | | 45 | 55 | 70 | 10 | 10 | 10 | 10 | 70 | 0 | 10 | 80 | 10 | 10 |
| Discharging condit ion of resin from extruder during granulation | | A | A | A | A | A | A | A | A | A | A | - | A | D |
| MFR(g/10min) | | 12 | 9 | 6 | 6 | 21 | 20 | 25 | 2 | 1 | 3 | - | 2 | 3 |
| Molding processability | | ○ | ○ | ○ | ⊚ | ⊚ | ⊚ | ⊚ | △ | △ | ⊚ | - | × | △ |
| Tensi to strength (MPa) | | 36 | 35 | 31 | 36 | 45 | 34 | 32 | 40 | 24 | 29 | - | - | 41 |
| Flexural strength (MPa) | | 81 | 56 | 47 | 50 | 82 | 54 | 48 | 61 | 41 | 45 | - | - | 55 |
| Deflection temperature under load (t) | | 151 | 148 | 148 | 98 | 151 | 151 | 147 | 149 | 135 | 127 | - | - | 153 |

In Comparative Example 8, molding was impossible, and in Comparative Example 9, the molding processability was poor, and thus no evaluation was performed.

### Reference Signs List

- 1: Unbent cellulose fiber
- 2: Bent cellulose fiber
- 10: One end (arbitrary)
- 11: Axial direction at one end (axial direction (A))
- 12: Another end (arbitrary)
- 13: Axial direction at another end (axial direction (B))
- α: Bending angle

## Claims

1. A thermoplastic resin composite material comprising:
cellulose fibers;
a compatibilizer; and
a thermoplastic resin, wherein
the cellulose fibers substantially include only fibers having a fiber diameter of 1 to 50 µm and a fiber length of 10 to 400 µm,
a composition ratio by mass of the cellulose fibers to the thermoplastic resin is 10 : 90 to 80 : 20, and
arbitrary 10 sections of the thermoplastic resin composite material have a standard deviation of a proportion of an area occupied by the cellulose fibers per predetermined area, the standard deviation being 15% or less.

2. The thermoplastic resin composite material according to claim 1, wherein each of the cellulose fibers has a bending angle of 0 to 60°, the bending angle formed by an axial direction (A) of the each of the cellulose fibers at one end and an axial direction (B) of the each of the cellulose fibers at another end.

3. The thermoplastic resin composite material according to claim 1 or 2, wherein the composition ratio by mass of the cellulose fibers to the thermoplastic resin is 60 : 40 to 20 : 80.

4. The thermoplastic resin composite material according to any one of claims 1 to 3, wherein the thermoplastic resin includes any of a polyethylene resin, a polypropylene resin, a vinyl chloride resin, a methacrylic resin, a polystyrene resin, an ABS resin, a polycarbonate resin, a polyacetal resin, a polyamide resin, a polysulfone resin, a modified PPO resin, and a polyester resin.

5. A thermoplastic resin composite material particle comprising:
cellulose fibers; and
a thermoplastic resin, wherein
the cellulose fibers have an average fiber length of 10 to 400 µm,
the cellulose fibers have an average fiber diameter of 1 to 50 µm,
a content of the cellulose fibers is 20 to 80 mass% based on 100 mass% of a sum of a mass of the thermoplastic resin and a mass of the cellulose fibers, and
the cellulose fibers are substantially oriented in an axial direction of the thermoplastic resin composite material particle.

6. The thermoplastic resin composite material particle according to claim 5, having a melt mass flow rate of 5 to 30 (g/10 min) measured under a load of 2.16 kgf at 230°C.

7. The thermoplastic resin composite material particle according to claim 5 or 6, wherein each of the cellulose fibers has a bending angle of 0 to 60°, the bending angle formed by an axial direction (A) of the each of the cellulose fibers at one end and an axial direction (B) of the each of the cellulose fibers at another end.

8. The thermoplastic resin composite material particle according to any one of claims 5 to 7, wherein the thermoplastic resin includes any of a polyethylene resin, a polypropylene resin, a vinyl chloride resin, a methacrylic resin, a polystyrene resin, an ABS resin, a polycarbonate resin, a polyacetal resin, a polyamide resin, a polysulfone resin, a modified PPO resin, and a polyester resin.

9. A molded article obtained by molding the thermoplastic resin composite material particle according to any one of claims 5 to 8.
